# FASCICULE DE BREVET EUROPEEN

(11) **EP 0 455 540 B1**
(45) Date de publication et mention de la délivrance du brevet: **02.03.1994**
(21) Numéro de dépôt: 91401075.6
(22) Date de dépôt: 23.04.1991
(51) Int. Cl.: G09B 9/32, G09B 9/46

(54) **Augmentation du champ vertical d'un système de projection collimatée à grand champ horizontal**
Vergrösserung des Vertikalfeldes eines kollimierenden Projecktionssystems mit grossem Horizontalfeld
Increasing the vertical field of a collimated wide horizontal angle projection system

(30) Priorité: 02.05.1990 FR 9005541
(43) Date de publication de la demande: 06.11.1991
(73) Titulaire: THOMSON-CSF, 75008 Paris (FR)
(72) Inventeur: Lacroix, Michel, F-92045 Paris La Défense (FR)
(74) Mandataire: Chaverneff, Vladimir

(56) Documents cités:
- WO-A-81/01214
- FR-A- 2 106 031
- GB-A- 2 068 138
- GB-A- 2 091 193
- US-A- 3 880 509
- US-A- 4 793 687
- ENGINEERING, vol. 225, no. 3, mars 1985, page 9, Londres, GB; "Wide flightsimulator display system"

## Description

Dans des simulateurs de vol, tels que des simulateurs d'hélicoptères, on sait obtenir un grand champ horizontal (180° ou plus) grâce à des systèmes de projection collimatée à l'infini utilisant un miroir sphérique hors d'axe et un écran également sphérique associé à un projecteur (voir par exemple Engineering, vol. 225, no. 3, mars 1985, page 9, Londres, GB ; "Wide flight simulator display system"). Par contre, dans le sens vertical, le champ atteint à peine 40°, à cause de la conformation du système optique. Pour pouvoir visualiser l'image vue à travers les fenêtres basses d'un hélicoptère, on a généralement recours à un moniteur à tube cathodique avec un système de renvoi à l'infini, mais dans ce dernier cas, le champ dû au moniteur n'est pas suffisant.

La présente invention a pour objet un système de projection pour simulateur à cabine, en particulier pour simulateur d'hélicoptère, présentant à la fois un grand champ horizontal et un grand champ vertical, et ce, sans erreurs de parallaxe.

Le système conforme à la présente invention comporte, en plus du système connu de projection collimatée à renvoi à l'infini utilisant un miroir sphérique pour la visualisation de la partie supérieure du champ vertical, un système de projection collimatée à l'infini et utilisant un miroir sphérique hors d'axe et un écran inférieur latéral pour la visualisation de chacune des deux parties latérales inférieures du champ vertical.

La présente invention sera mieux comprise à la lecture de la description détaillée d'un mode de réalisation pris à titre d'exemple non limitatif et illustré par le dessin annexé sur lequel :
- les figures 1 et 2 sont respectivement une vue de dessus et une vue en coupe d'un simulateur de type connu,
- la figure 3 est une vue de côté en coupe d'un système conforme à l'invention, et

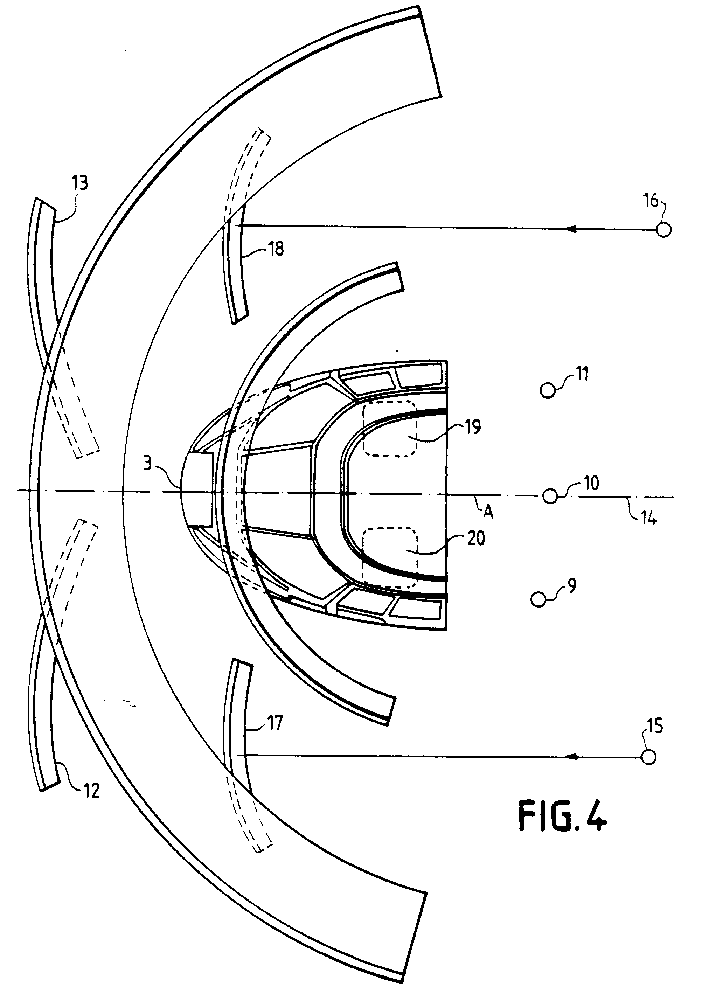

- la figure 4 est une vue de dessus du système de la figure 2.

L'invention est décrite ci-dessous en référence à un simulateur d'hélicoptère, dont la partie basse de la cabine comporte des zones opaques au centre et des fenêtres sur les côtés, et le rôle du simulateur est de restituer, outre le champ principal à grand angle, l'image vue, aussi bien par le pilote que par le copilote, à traverse ces fenêtres basses. Bien entendu, l'invention n'est pas limitée à l'application à un simulateur d'hélicoptère, et peut être mise en oeuvre dans un simulateur dans lequel il faut visualiser des images à grand champ horizontal et vertical dont une partie sensiblement centrale est masquée par la cabine.

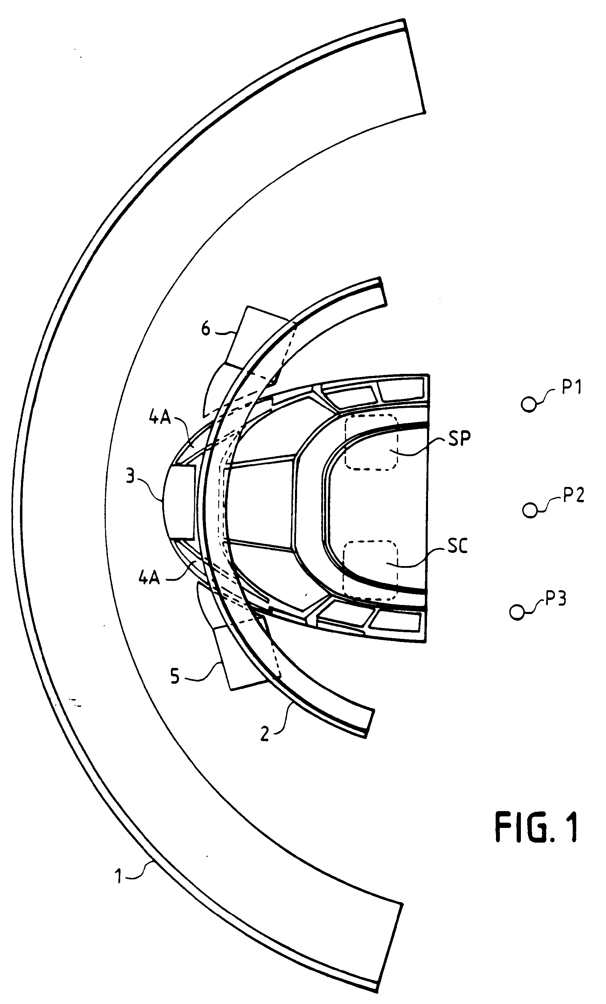

On a schématiquement représenté en figure 1, un simulateur à cabine de l'art antérieur à plusieurs, par exemple trois projecteurs. Ce simulateur comporte un miroir 1 couvrant un champ horizontal de 180° environ. Le miroir 1 est associé à un écran 2 couvrant également un champ horizontal de 180° environ. Le système de projection comporte, dans le cas présent, trois projecteurs P1 à P3 coopérant avec le miroir 1 et l'écran 2, et situés en arrière et au-dessus des observateurs assis à leur place normale (siège SP du pilote et SC du copilote) dans la cabine 3. Pour visualiser les images devant être vues à travers les fenêtres basses latérales 4A,4B de la cabine, on dispose à proximité de ces fenêtres basses un système de projection complémentaire, référencé 5 pour les fenêtres basses de gauche, et 6 pour celles de droite. Chacun de ces systèmes comporte un écran cathodique, une lame semi-transparente à 45° et un miroir sphérique. Pour des raisons d'implantation, la distance entre l'observateur et le miroir du système de projection complémentaire correspondant est nettement supérieure au rayon de ce miroir, ce qui fait que le champ de ce système complémentaire est très réduit et ne permet de couvrir qu'une faible partie des fenêtres basses.

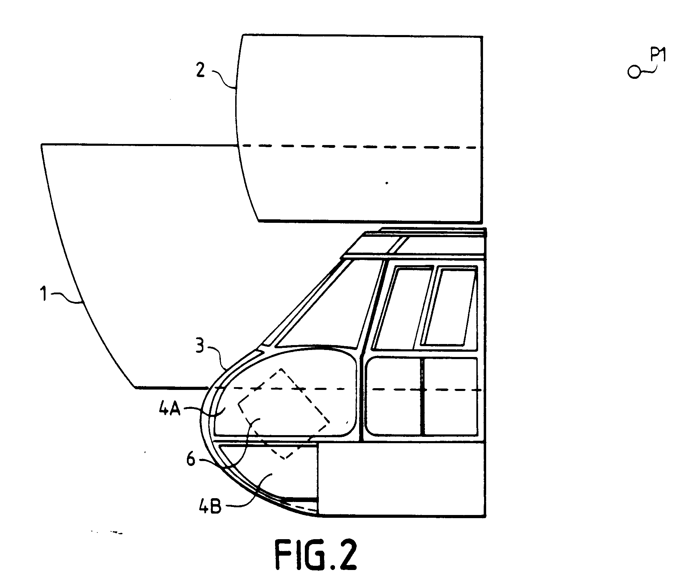

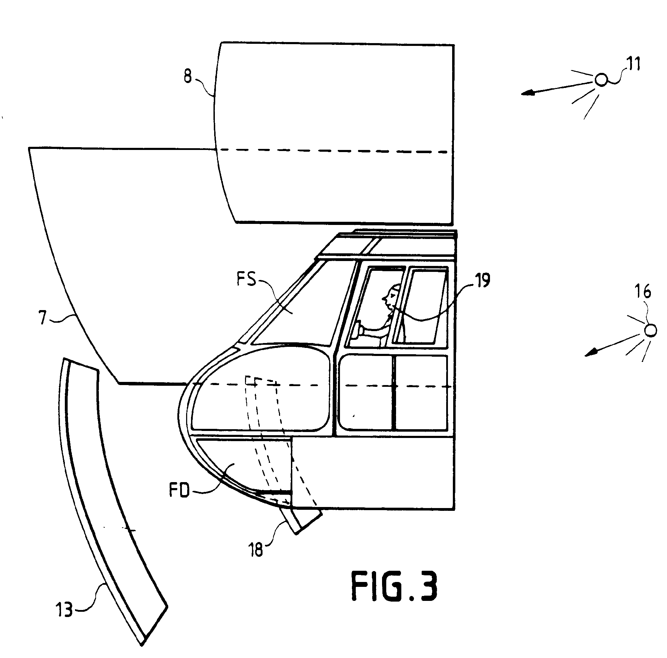

On a représenté en figures 2 et 3 le système de projection conforme à l'invention. Ce système comporte un miroir supérieur 7 similaire au miroir 1 de l'art antérieur. Ce miroir permet avantageusement de visualiser un champ horizontal d'environ 180° à 225° visible à travers les fenêtres supérieures FS de la cabine.

Le miroir 7 est associé à un écran supérieur 8, similaire à l'écran 2 des figures 1 et 2, et à trois projecteurs 9,10,11 permettant d'obtenir une image panoramique d'environ 180° dans le sens horizontal. L'écran 8 est au-dessus des yeux des observateurs (pilote et copilote).

Pour visualiser les images susceptibles d'être vues à travers les fenêtres basses de la cabine, l'invention prévoit de disposer sous le miroir supérieur 7 deux miroirs inférieurs latéraux 12,13 symétriques par rapport à l'axe longitudinal 14 de la cabine 3 du simulateur. Chacun de ces miroirs 12,13 est associé à un écran latéral 17,18 respectivement et à un projecteur 15,16. Les miroirs 12,13 sont des miroirs sphériques et sont disposés de façon à pouvoir être vus par le pilote et le copilote à travers leurs fenêtres basses respectives. Les bords de ces miroirs 12,13 et écrans 17,18 sont à peu près au même niveau horizontal et légèrement au-dessus du bord inférieur du miroir 7. Les miroirs 7,12,13 sont avantageusement rigides, en verre ou en sandwich plastique/mousse/plastique, ce qui permet, grâce aux bords francs de tels miroirs, leur bon raccordement. On notera que pour avoir un bon raccordement des miroirs 7,12,13 il faut en particulier que le bord inférieur du miroir 7 soit un bord franc car le miroir 7 masque le bord supérieur des miroirs 12 et 13, ce qui fait qu'avec les technologies actuelles, au moins ce miroir 7 doit être rigide.

Les projecteurs latéraux 15,16 sont disposés de part et d'autre de la cabine 14, à peu près au niveau du plan horizontal passant par les yeux des observateurs. Ces projecteurs sont de tout type approprié : à "valve de lumière", à cristaux liquides, ou à tubes cathodiques à haute brillance.

## Revendications

1. Système de projection pour simulateur du type à cabine (3), comportant, pour la visualisation de la partie supérieure du champ vertical un système de projection collimaté à l'infini à grand champ horizontal comprenant plusieurs projecteurs (9,10,11), un miroir sphérique (7) à grand champ horizontal et un écran (8) également à grand champ horizontal, caractérisé par le fait qu'il comporte, pour la visualisation de chacune des deux parties latérales inférieures du champ vertical un système de projection collimatée à l'infini à miroir sphérique inférieur (12,13) hors d'axe, écran latéral inférieur (17,18) et projecteur inférieur (15,16).

2. Système selon la revendication 1, caractérisé par le fait que les projecteurs inférieurs sont situés de part et d'autre de la cabine.

3. Système selon la revendication 1 ou 2, caractérisé par le fait qu'au moins le miroir à grand champ horizontal (7,12,13) est rigide.

4. Système selon la revendication 3, caractérisé par le fait qu'au moins le miroir à grand champ horizontal (7,12,13) est en verre.

5. Système selon la revendication 3, caractérisé par le fait qu'au moins le miroir à grand champ horizontal (7,12,13) est en sandwich plastique/mousse/plastique.

6. Système selon l'une des revendications précédentes, caractérisé par le fait que les projecteurs inférieurs sont du type à " valve de lumière ".

7. Système selon l'une des revendications 1 à 5, caractérisé par le fait que les projecteurs inférieurs sont du type à cristaux liquides.

8. Système selon l'une des revendications 1 à 5, caractérisé par le fait que les projecteurs inférieurs sont du type à tubes cathodiques à haute brillance.

## Claims

1. Projection system for a simulator of the type with a cabin (3) including, for viewing the upper part of the vertical field, a projection system collimated at infinity with a wide horizontal field comprising several projectors (9, 10, 11), a spherical mirror (7) with a wide horizontal field, and a screen (8), also with a wide horizontal field, characterized in that it includes, for viewing each of the two lower lateral parts of the vertical field, a projection system collimated at infinity with an off-axis lower spherical mirror (12, 13), a lower lateral screen (17, 18), and lower projector (15, 16).

2. System according to Claim 1, characterized in that the lower projectors are located on either side of the cabin.

3. System according to Claim 1 or 2, characterized in that at least the mirror with a wide horizontal field (7, 12, 13) is rigid.

4. System according to Claim 3, characterized in that at least the mirror with a wide horizontal field (7, 12, 13) is made of glass.

5. System according to Claim 3, characterized in that at least the mirror with a wide horizontal field (7, 12, 13) is made of a plastic/foam/plastic sandwich.

6. System according to one of the preceding claims, characterized in that the lower projectors are of the type with a "light valve".

7. System according to one of Claims 1 to 5, characterized in that the lower projectors are of the liquid crystal type.

8. System according to one of Claims 1 to 5, characterized in that the lower projectors are of the type with high brilliancy cathode ray tubes.

## Patentansprüche

1. Projektionssystem für einen Simulator mit einer Kabine (3), welches zur Sichtbarmachung des oberen Abschnitts des vertikalen Bildfeldes ein Projektionssystem mit parallelem Strahlengang und mit einem großen horizontalen Bildfeld enthält, wobei das Projektionssystem mehrere Projektoren (9, 10, 11), einen sphärischen Spiegel (7) mit großem horizontalen Bildfeld und einen Bildschirm (8) mit ebenfalls einem großen horizontalen Bildfeld enthält, dadurch gekennzeichnet, daß es zur Sichtbarmachung jedes der beiden unteren seitlichen Abschnitte des vertikalen Bildfeldes ein Projektionssystem mit parallelem Strahlengang mit ungleichachsig angeordnetem sphärischem, unterem Spiegel (12, 13), seitlichem unterem Bildschirm (17, 18) und unterem Projektor (15, 16) enthält.

2. System nach Anspruch 1, dadurch gekennzeichnet, daß die unteren Projektoren auf der einen und auf der anderen Seite der Kabine angeordnet sind.

3. System nach Anspruch 1 oder 2, dadurch gekennzeichnet, daß wenigstens der Spiegel (7, 12, 13) mit großem horizontalem Bildfeld starr ist.

4. System nach Anspruch 3, dadurch gekennzeichnet, daß wenigstens der Spiegel (7, 12, 13) mit großem horizontalem Bildfeld aus Glas ist.

5. System nach Anspruch 3, dadurch gekennzeichnet, daß wenigstens der Spiegel (7, 12, 13) mit großem horizontalem Bildfeld eine Kunststoff/Schaum/Kunststoff-Sandwichkonstruktion ist.

6. System nach einem der vorhergehenden Ansprüche, dadurch gekennzeichnet, daß die unteren Projektoren vom Typ mit Lichtventil" sind.

7. System nach einem der Ansprüche 1 bis 5, dadurch gekennzeichnet, daß die unteren Projektoren Flüssigkristall-Projektoren sind.

8. System nach einem der Ansprüche 1 bis 5, dadurch gekennzeichnet, daß die unteren Projektoren Katodenstrahlröhren-Projektoren mit großer Helligkeit sind.
